Europäisches Patentamt

European Patent Office

Office européen des brevets

(19)

(11) Numéro de publication : **0 539 280 A1**

(12) ## DEMANDE DE BREVET EUROPEEN

(21) Numéro de dépôt : **92402861.6**

(51) Int. Cl.⁵ : **B01D 61/00**

(22) Date de dépôt : **20.10.92**

(30) Priorité : **22.10.91 FR 9113013**

(43) Date de publication de la demande :
**28.04.93 Bulletin 93/17**

(84) Etats contractants désignés :
**DE ES GB IT**

(71) Demandeur : **C O G I A Société Anonyme**
**Parc Club, 2 Rue Jean Rostand**
**F-91893 Orsay (FR)**

(72) Inventeur : **Deblay, Philippe**
**2 Allée Angélique**
**F-92290 Chatenay-Malabry (FR)**

(74) Mandataire : **Warcoin, Jacques et al**
**Cabinet Régimbeau 26, avenue Kléber**
**F-75116 Paris (FR)**

(54) **Procédé de déshydratation au moins partielle d'une composition aqueuse et dispositifs pour mettre en oeuvre le procédé.**

(57)    La présente invention concerne un procédé de déshydratation au moins partielle d'une composition aqueuse, caractérisée en ce que ladite composition à déshydrater est mise en contact, par l'intermédiaire d'une membrane hydrophobe microporeuse, avec une phase réceptrice dont l'activité de l'eau est sensiblement inférieure à celle de la composition aqueuse et en ce que l'on récupère la composition aqueuse au moins partiellement déshydratée.

L'invention concerne également des dispositifs permettant de mettre en oeuvre le procédé, notamment en continu.

EP 0 539 280 A1

Jouve, 18, rue Saint-Denis, 75001 PARIS

La présente invention concerne un procédé de déshydratation au moins partielle d'une composition aqueuse. Elle concerne également des dispositifs pour mettre en oeuvre ledit procédé de déshydratation.

Les opérations de concentration par déshydratation, nécessaires à la fabrication de nombreux produits de grande consommation se rencontrent principalement dans les industries agro-alimentaires et bio-technologiques.

L'augmentation de la teneur en matière sèche est obtenue classiquement par élimination du solvant (en général l'eau) par voie thermique, évaporation par exemple, ou par voie physique, en utilisant par exemple les techniques d'osmose inverse ou d'ultra-filtration.

Dans le secteur des biotechnologies par exemple, les procédés membranaires classiques tels que l'osmose inverse et l'ultra-filtration sont particulièrement avantageux pour la concentration des solutés fragiles, notamment lors de la préparation d'enzymes, d'acides nucléiques, de vaccins.

Ces procédés permettent en effet de minimiser les pertes d'activité dues à l'effet de la température, contrairement à l'évaporation ou la distillation et de maintenir les structures et par conséquent l'activité biologique.

Ces procédés présentent cependant un certain nombre d'inconvénients, le plus important d'entre eux étant le manque de sélectivité par rapport aux solutés de faible poids moléculaire.

Le seuil de coupure, correspondant à la plus petite masse moléculaire retenue par la membrane, est en effet de l'ordre de 200 dans le cas de l'osmose inverse, et d'un ordre de grandeur supérieur dans le cas de l'ultrafiltration (Delaunay et coll. Revue générale du froid II, 622-626 (1979)). Dans ces conditions, les petites molécules, tels les sucres, les acides aminés et les sels, traversent la membrane, au moins partiellement, avec le solvant aqueux.

On observe également dans ces procédés une accumulation progressive des molécules arrêtées le long de la membrane sous l'effet de la pression ; c'est le phénomène de polarisation de concentration comme décrit par Maurel, Techniques de l'Ingénieur, chimie-génie chimique, tome II, J2790/1-J2795/6 (1989). Il en découle une diminution des performances de l'installation, en termes de flux de solvant et de taux de rejet. De plus, l'opération de concentration ne peut pas être quantitative en raison des pertes par dépôt.

On peut enfin supposer que sous l'effet de la pression appliquée (jusqu'à 60 bar dans le cas de l'osmose inverse), certains solutés ou constituants particulièrement fragiles soient en tout ou partie dégradés.

Dans les industries agricoles et alimentaires la concentration des produits présente un double intérêt : il permet en effet d'augmenter la durée de vie de ces denrées par réduction de la détérioration chimique, enzymatique et microbiologique et de réduire les coûts de stockage et de transport. En particulier, dans les pays tropicaux, la conservation des produits alimentaires riches en eau, tels les légumes (de 70 à 90 % d'eau), est un problème crucial. Le développement des microorganismes dans les aliments est en effet directement liée à l'activité de l'eau (notée aw). Le terme activité de l'eau désigne le rapport entre la pression de vapeur de l'eau dans l'aliment (liquide ou solide) et la pression de la vapeur de l'eau pure à la même température. Le développement des microorganismes est d'autant plus important que l'aw est proche de 1. Ils ne se multiplient plus lorsqu'elle est inférieure à 0,6 (Botton et coll.; collection biotechnologies, Masson, Paris 232-233 (1985)). La conservation des aliments nécessite donc de leur faire subir un traitement menant à une diminution de leur teneur en eau.

Parmi les traitements envisagés, la déshydratation osmotique à travers une membrane semi-perméable hydrophile a été utilisée dès 1938 pour la concentration des liquides alimentaires à forte teneur en eau, tels les jus de fruits comme décrit dans le brevet US 2 116 920. Le procédé est basé sur le principe de l'osmose : une membrane semi-perméable sépare le liquide à concentrer d'une solution ayant une pression osmotique plus élevée. L'eau diffuse à travers la membrane de la solution la moins concentrée vers la solution la plus concentrée. Ce transport d'eau repose donc sur un gradient de pression osmotique ou, en d'autres termes, d'activité de l'eau, ces deux grandeurs étant liées par la relation :

$$a_w = e^{-(\pi V/RT)}.$$

Historiquement, le premier dispositif utilisé pour concentrer les jus de fruits était constitué d'une membrane en cellophane et d'un sirop de sucre ou d'une solution de chlorure de calcium comme phase réceptrice d'eau (US 2 116 920). Le principal avantage de ce procédé consiste à réaliser la concentration à température ambiante, voire à plus basse température. L'inconvénient majeur correspond à un transport non sélectif d'eau, la concentration de jus d'orange ayant par exemple montré la diffusion de l'acide citrique à travers la membrane de cellophane.

La déshydratation osmotique des aliments "solides" a été également envisagée depuis 1947 (US 2 420 517). Le procédé consiste à immerger le produit alimentaire dans une solution d'un produit organique hydrophile ayant une activité de l'eau inférieure à celle de l'aliment. Ce soluté constitutif de la phase réceptrice doit être très soluble dans l'eau hygroscopique, non toxique, inerte vis à vis de la flaveur, l'odeur et la couleur de l'aliment et moins volatil que l'eau. Les constituants les plus souvent rencontrés sont :

- des produits purs : chlorure de sodium, sucrose ou glycérol,
- des matière premières agricoles : mélasse de canne ou sirop de maïs,
- des mélange de ces composés : chlorure de sodium et glycérol ou sirop de maïs et sucrose.

La déshydratation de l'aliment s'accompagne d'une augmentation de sa teneur en soluté constitutif de la phase réceptrice ; par rapport au poids initial de l'aliment, la perte d'eau est compensée par le gain en soluté comme ceci est expliqué par Adambounou et coll., Science des aliments, 3, 551-587 (1983).

Le principal avantage de ces procédés consiste à pouvoir réhydrater rapidement le produit alimentaire solide pour revenir à un état plus proche de l'état initial frais que celui de l'aliment séché de manière traditionnelle.

Le flux d'eau s'accompagne néanmoins de diffusions indésirables de substances hydrosolubles d'une part, acides organiques courts par exemple et de sucre ou sel présents dans la phase réceptrice d'eau d'autre part : les modifications notables des propriétés organoleptiques qui en découlent (goût et odeur notamment) représentent le principal inconvénient de ce procédé.

L'invention se propose donc notamment d'améliorer les procédés qui viennent d'être décrits.

Ainsi, un des objets de la présente invention est de proposer un procédé dont la sélectivité est excellente vis-à-vis des constituants tant de la composition aqueuse à déshydrater que de la phase réceptrice.

Un autre objet de la présente invention est de proposer un procédé dont les performances sont excellentes, le flux initial de transport d'eau étant de l'ordre de $10^{-2}$ mol/h.cm$^2$ et l'extraction de l'eau étant supérieure à 70 % du volume initial de la solution et pouvant même atteindre 95 % de celui-ci.

Un autre objet de la présente invention est de proposer un procédé de déshydratation réalisable à basse température, sans agitation et sans diminution drastique du flux de transport d'eau.

Un autre objet de la présente invention est également de proposer des dispositifs particulièrement adaptés à la mise en oeuvre du procédé.

D'autres avantages et objets de la présente invention apparaîtront à la lumière de la description qui va suivre.

L'invention propose en premier lieu un procédé de déshydratation au moins partielle d'une composition aqueuse, caractérisé en ce que ladite composition à déshydrater est mise en contact, par l'intermédiaire d'une membrane hydrophobe microporeuse, avec une phase réceptrice dont l'activité de l'eau est sensiblement inférieure à celle de la composition aqueuse et en ce que l'on récupère la composition aqueuse au moins partiellement déshydratée.

Toutes les compositions aqueuses destinées à être déshydratées peuvent convenir dans le cadre de la présente invention. C'est le cas notamment de celles rencontrées dans les industries papetières et textiles, le traitement des eaux, les industries agroalimentaires et biotechnologiques.

Néanmoins, le procédé convient particulièrement aux compositions aqueuses liquides comportant des solutés fragiles et qui sont habituellement concentrées par des procédés d'osmose inverse ou d'ultra-filtration. Ainsi, le procédé convient notamment à la concentration de compositions comportant des enzymes, des acides nucléiques, des vaccins. Le procédé trouve également une utilisation particulièrement intéressante dans le cas de la concentration des liquides alimentaires à forte teneur en eau, telle que les jus de fruits, les jus de légumes.

Les compositions aqueuses peuvent être également solides. On peut citer notamment les fruits découpés destinés à être désséchés tout en conservant leur saveur et leurs différentes vitamines, les différents légumes susceptibles d'être présentés sous une forme déshydratée, tout en pouvant éventuellement être ensuite réhydratés pour une consommation ultérieure. Les compositions aqueuses peuvent être également gazeuses, comme l'air.

Bien entendu, cette énumération n'est pas limitative du procédé selon l'invention.

La phase réceptrice peut être de forme solide (par exemple $P_2O_5$). Elle peut être également sous la forme d'un gel, aqueux notamment. Toutefois, afin d'assurer un bon contact entre la membrane et ladite phase réceptrice, il a été trouvé que des phases liquides convenaient tout particulièrement et notamment celles qui comprennent une solution aqueuse d'au moins un soluté permettant d'abaisser l'activité de l'eau.

Les solutés convenant doivent être de préférence très solubles dans l'eau et hygroscopiques. On citera notamment le chlorure de calcium, le chlorure de magnésium, le chlorure de sodium. Parmi ceux-ci, il a été trouvé qu'il était particulièrement avantageux d'utiliser le chlorure de calcium. En général, il est avantageux d'utiliser une phase réceptrice dont la concentration en soluté sera proche de la saturation.

Ainsi, dans le cas de $CaCl_2$ qui est le soluté qui sera le plus avantageusement choisi dans le cas de la présente invention, la concentration sera au moins égale à 5 M et de préférence égale ou supérieure à 6 M.

Dans l'industrie agroalimentaire, il est préférable que les phases réceptrices soient non toxiques, inertes vis-à-vis des flaveurs, l'odeur et la couleur des aliments. Les solutés cités ci-dessus présentent dans bien des cas ces avantages.

En outre, afin d'accroître encore la sélectivité du procédé lorsque les compositions aqueuses sont liquides, il a été trouvé avantageux d'utiliser une phase réceptrice, telle que décrite ci-dessus avec ses variantes préférées, comportant de plus un ou plusieurs constituants volatils présents dans la composition aqueuse à déshydrater. De préférence, ce ou ces constituants sont présents à une concentration sensiblement égale à celle existante dans la composition aqueuse.

Selon une variante très avantageuse, le procédé selon l'invention est caractérisé en ce que la phase réceptrice liquide comprend la solution aqueuse d'un soluté permettant d'abaisser l'activité de l'eau et est constituée de la composition aqueuse liquide à déshydrater et dudit soluté.

En général, le flux de transport d'eau sera d'autant plus élevé que le rapport de l'activité de l'eau de la composition aqueuse à concentrer à l'activité de l'eau de la phase réceptrice est élevée.

Ainsi, une des caractéristiques avantageuses de la présente invention réside dans le fait que le flux initial d'eau est supérieur à $5.10^{-4}$ mole/h.cm$^2$ et de préférence encore supérieur à $10^{-3}$ mole/h.cm$^2$.

Bien qu'il soit difficile d'indiquer une borne supérieure, il est bien connu que sur un plan industriel ledit flux est inférieur ou égal à $10^{-1}$ mole/h.cm$^2$. Ce flux tend à dminuer au cours du temps, en raison de la diminution du gradient d'activité de l'eau entre la composition aqueuse et la phase réceptrice. Ce flux devra de préférence rester suffisant au cours du procédé pour qu'au moins 70 % de l'eau de la composition aqueuse soit transférée dans un temps raisonnable d'un point de vue industriel (notamment moins de 24 heures et de préférence moins de 10 heures). Le rajout progressif dans la phase réceptrice d'au moins un soluté abaissant l'activité de l'eau permettra par exemple de maintenir un gradient d'activité de l'eau à une valeur importante, et par là de maintenir un flux à peu près constant.

Selon une autre variante avantageuse, l'activité de l'eau de la phase réceptrice devra être de préférence inférieure à 30 % à celle de la composition aqueuse, avantageusement inférieure d'environ 50 % et très avantageusement inférieure d'au moins environ 60 %.

En général, la phase réceptrice présentera une activité de l'eau au moins inférieure à 0,6, de préférence inférieure à 0,4 et très avantageusement inférieure à environ 0,3 lorsque la composition aqueuse présente une activité de l'eau environ supérieure à 0,9.

Ainsi, dans le cas des produits classiquement rencontrés dans les industries biotechnologiques : un sucre (glucose), des acides aminés (tryptophane et acide glutamique), une vitamine (vitamine B12), une enzyme (alpha-amylase) et un peptide bio-actif (kyotorphine) l'activité de l'eau est généralement voisine de 1, compte tenu du fait que les solutés présents sont en général relativement peu concentrés. Parmi les denrées alimentaires solides, les produits frais en général et les fruits en particuliers ont une activité de l'eau supérieure à 0,98. L'activité de l'eau des jus de fruits est également assez élevée, généralement comprise entre 0,9 et 1. Afin d'obtenir un maximum d'efficacité, la phase réceptrice devra présenter dans les cas précités une activité de l'eau inférieure à environ 0,6, de préférence inférieure à 0,4 et très avantageusement inférieure à environ 0,3.

La température à laquelle le procédé doit être effectué est généralement supérieure à 0°C et doit être inférieure à la température où les composants de la composition aqueuse peuvent être détruits. La température sera de préférence comprise entre environ 25 et environ 50°C.

Le terme "membrane hydrophobe microporeuse" implique que le matériau comprend des pores non visibles à l'oeil nu mais détectables au microscope optique. Plusieurs critères peuvent être retenus pour choisir ce type de membrane. En effet, si le diamètre moyen des pores est un paramètre essentiel, la porosité volumique, c'est-à-dire le pourcentage en volume des pores par rapport au volume total du matériau doit être également pris en compte. Avantageusement le diamètre moyen des pores est compris entre 0,02 μm et 5 μm. La porosité volumique sera de préférence supérieure à 40 %, avantageusement supérieure à 80 %.

Sans être de quelque manière que ce soit lié par une interprétation scientifique, le déposant pense que le procédé selon l'invention fonctionne par évaporation osmotique. En effet, la nature hydrophobe de la membrane la rend imperméable à l'eau sous forme liquide, et en conséquence, imperméable aux solutés aqueux non volatils (notamment ions et molécules organiques). Le passage de l'eau s'effectue donc probablement sous forme vapeur, par simple diffusion gazeuse dans les micropores de la membrane.

De manière générale, les membranes hydrophobes sont formées de matériaux polymères qui ne comportent essentiellement pas de groupes hydrophiles dans leur réseau. Elles sont donc essentiellement constituées de polymères obtenus à partir d'hydrocarbures tels que les polyoléfines. Parmi ces polyoléfines on citera avantageusement les polyéthylènes, polypropylènes, les polyisopropylènes, polyvinylidènes, ou un mélange de ces différents polymères. Ces polyoléfines pourront être éventuellement fluorées telles que les polytétrafluoroéthylènes ou les polyfluorovinylidènes. C'est un trait néanmoins essentiel de la présente invention que la membrane ait un caractère hydrophobe. Ces membranes sont présentées habituellement sous forme plane ou de fibres creuses.

L'invention concerne également un procédé de déshydratation au moins partielle en continu d'une composition aqueuse liquide ou gazeuse, caractérisé en ce qu'un courant de ladite composition aqueuse est mis en contact avec une phase réceptrice par l'intermédiaire d'une membrane telle que définie précédemment. Dans ce cas, comme cela sera compris à la lumière de la description ci-après concernant les dispositifs pour mettre en oeuvre le procédé, la membrane est de préférence sous forme de fibres creuses.

La phase réceptrice peut être stationnaire ou, lorsqu'elle est liquide, avantageusement mobile. Cette phase réceptrice dans ce dernier cas peut circuler à co-courant ou à contre-courant de la composition aqueuse.

Le rapport du volume initial de la composition aqueuse à la surface développée de membrane doit avantageusement être inférieur à 25 cm$^3$/cm$^2$, et de préférence compris entre 0,25 et 2,5 cm$^3$/cm$^2$.

La vitesse tangentielle de balayage de la membrane par la composition aqueuse doit avantageusement être supérieure à 1 cm/s, et de préférence comprise entre 10 et 100 cm/s.

L'invention concerne également un dispositif pour mettre en oeuvre le procédé selon l'invention qui vient d'être décrit, ledit dispositif étant caractérisé en ce qu'il comprend un ou plusieurs compartiments dans lesquels est disposée la composition aqueuse, une paroi au moins desdits compartiments étant formée par une membrane telle que définie ci-dessus, cette membrane séparant la composition d'une phase réceptrice telle que décrite ci-dessus.

Selon une première variante, le dispositif est constitué d'une composition aqueuse solide (par exemple des fruits découpés en lamelles) enveloppée dans une membrane et immergée dans une phase réceptrice conforme à la présente invention.

Selon une variante préférée permettant de mettre en oeuvre un procédé en continu, l'invention concerne un dispositif caractérisé en ce que la membrane hydrophobe microporeuse est formée de fibres creuses, à l'intérieur desquelles circule la composition aqueuse à déshydrater, liquide ou gazeuse, introduite dans les fibres par une entrée et récupérée déshydratée au moins partiellement par une sortie, lesdites fibres étant immergées dans la phase réceptrice telle que définie ci-dessus. La phase réceptrice peut être stationnaire, ou, lorsqu'elle est liquide, avantageusement mobile autour des fibres creuses.

De préférence, les fibres ont un diamètre interne compris entre 0,1 et 10 mm.

L'invention va maintenant être décrite à partir d'exemples concrets de réalisation et notamment, à partir de deux dispositifs qui permettent de mettre en oeuvre le procédé de deshydratation.

Ces dispositifs vont être décrits en liaison avec les figures 1, 2 et 3 annexées à la présente description.
- la figure 1 représente une vue en coupe longitudinale du premier dispositif.
- la figure 2 représente une vue en coupe longitudinale d'un autre dispositif permettant de mettre en oeuvre le procédé en continu.
- la figure 3 représente une vue en perspective du module de fibres du dispositif de la figure 2.

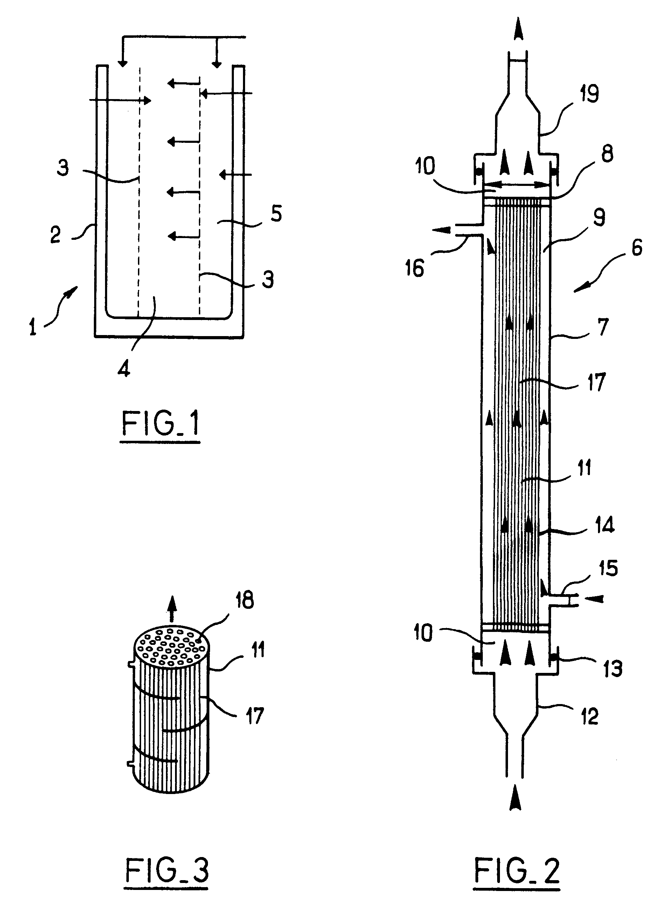

Selon la figure 1, le dispositif 1 est un concentrateur statique, habituellement employé pour la concentration des solutés de poids moléculaire supérieur à 15 000. Ce concentrateur comprend un réservoir 2 en plexiglass de section transversale rectangulaire. A l'intérieur de ce réservoir ont été placées à équidistance l'une de l'autre et parallèlement, deux membranes 3, délimitant de façon étanche un compartiment central 4 de 370 cm$^3$ où est placée la phase réceptrice d'eau et deux compartiments latéraux 5, dans lesquels sont placés des solutions aqueuses à concentrer. Les étanchéités entre demi-cellules en plexiglass et membrane hydrophobe d'une part, et entre les deux demi-cellules d'autre part, sont réalisées par collage.

Selon les figures 2 et 3, le dispositif 6 est formé d'une structure tubulaire 7 fermée à proximité de ces deux extrémités par deux bouchons 8 délimitant d'une part un tube interne 9 et de part et d'autre de ce tube interne, deux extrémités tubulaires 10. Un module de fibres creuses 11 est placé co-axialement dans ledit tube interne. Ce module constitué d'une multiplicité de fibres creuses accolées 17 est fixé à ses extrémités aux bouchons 8, de telle manière que l'intérieur des fibres 18 puisse au moyen de cavités ménagées dans lesdits bouchons communiquer avec les extrémités externes de la structure tubulaire. Lesdites extrémités tubulaires sont reliées à des tubes 12, 19 de façon étanche, au moyen de joints 13, l'un des tubes permettant d'alimenter les fibres en composition aqueuse, liquide ou gazeuse et l'autre tube permettant de récupérer la composition partiellement déshydratée. Le volume extérieur aux fibres est rempli d'une phase réceptrice liquide ou solide 14. Avantageusement, cette phase réceptrice est liquide et mobile et dans ce cas, les fibres sont alimentées au moyen d'une entrée 15 située à l'une des extrémités du tube interne, et récupérées à l'autre extrémité par une sortie 16.

Les différentes alimentations sont assurées par des pompes de circulation reliées aux réservoirs correspondants.

L'alimentation de ce dispositif s'effectue avantageusement à co-courant, de manière à minimiser le gradient de pression transmembranaire aux extrémités des fibres.

Les exemples ci-dessous illustrent des mises en oeuvres particulières du procédé selon l'invention, sans toutefois limiter celle-ci.

<u>Essais dans une cellule d'étude agitée</u> (non figurée)

Chaque compartiment de la cellule a un volume de 12 cm$^3$ et la membrane séparant lesdits compartiments a une surface d'échange utile de 12 cm$^2$. On remplit complètement (volumes des phases aqueuses égaux à 12 cm$^3$) lesdits compartiments, l'un d'une solution aqueuse à concentrer, l'autre de la phase liquide réceptrice, $CaCl_2$ 6M, puis la cellule est placée sur une table d'agitation orbitale dans une enceinte thermostatée.

Les exemples ci-après ont été réalisés avec une membrane 0,45 $\mu$ (membrane n° 4 dans les exemples qui suivront) dont les caractéristiques sont les suivantes :

porosité : 85 %

Tortuosité : 1,18

épaisseur ($\mu$m) : 70

Nature : polytétrafluoroéthylène.

<u>Exemple 1</u>

On a réalisé avec la même cellule d'étude, trois essais de concentration d'une solution de tryptophane (0,51 g/l) et de phosphate monopotassique (7,5 x 10$^{-2}$M), l'activité de l'eau étant d'environ 0,99.

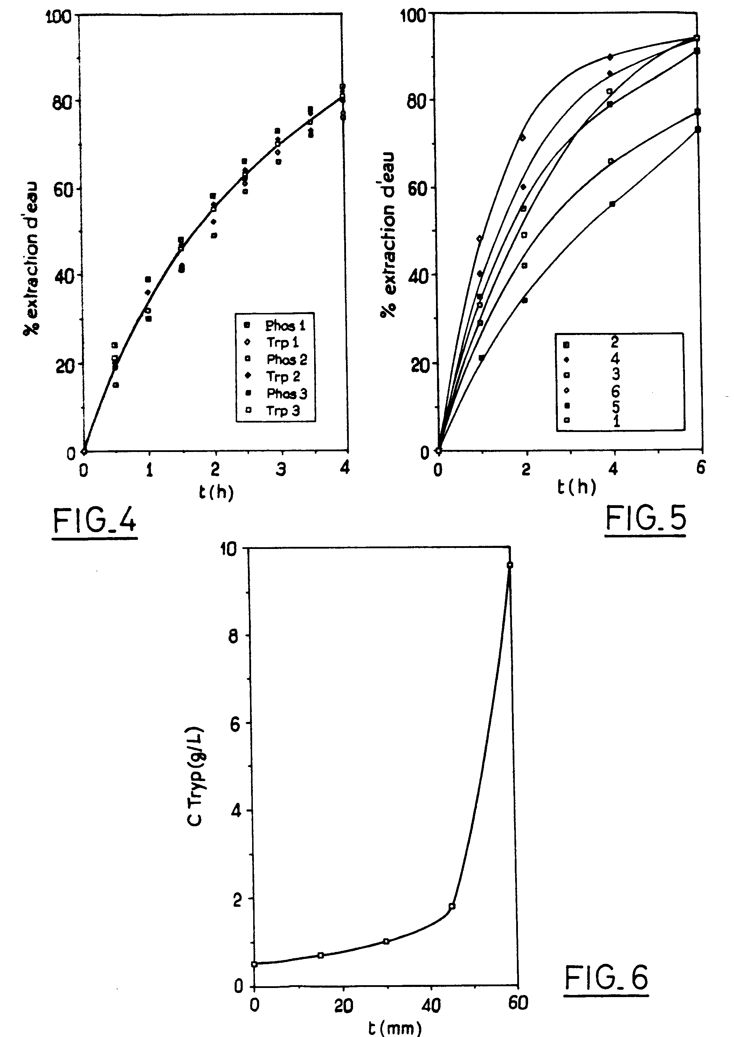

On n'observe pas de différence significative entre les différentes cinétiques ; la figure 4 présente la cinétique moyenne d'extraction d'eau mesurée à partir de celles mesurées pour chaque essai.

La vitesse de transport d'eau ralentit au cours du temps, en raison notamment de la dilution de la phase réceptrice (et par suite de l'augmentation de l'activité de l'eau dans cette phase). Le procédé s'avère être efficace : 80 % d'eau sont en effet transportés vers la phase réceptrice en 4 heures, le rapport volume initial/surface d'échange étant égal à 1 cm.

Il faut par ailleurs noter la sélectivité du transport d'eau. Aucune trace de tryptophane ou de phosphate n'est détectée dans la phase réceptrice (concentrations inférieures respectivement à 4 x 10$^{-4}$ g/l et 5 x 10$^{-5}$ M). La membrane hydrophobe reste également totalement imperméable aux ions chlorure (concentration en phase à concentrer inférieure à 10$^{-3}$ M).

L'exemple suivant est destiné à illustrer l'invention pour différents types de membranes et pour une solution donnée de tryptophane et de phosphate monopotassique. Les essais sont effectués dans les mêmes conditions que l'exemple 1.

<u>Exemple 2</u>

Les supports hydrophobes suivants ont été utilisés :

TABLEAU I

| Référence | Nature | Diamètre moyen du pore (µm) | Porosité volumique (%) | Epaisseur (µm) |
|---|---|---|---|---|
| 1 | PVDF | 0,22 | 75 | 125 |
| 2 | PTFE +PE | 0,5 | 85 | 60 +115 |
| 3 | PP | 0,04 | 45 | 25 |
| 4 | PTFE | 0,45 | 85 | 70 |
| 5 | PTFE | 0,02 | 50 | 80 |
| 6 | PTFE +PES | 0,2 | 78 | 60 +340 |

PVDF : fluorure de polyvinylidène

PTFE : polytétrafluoroéthylène

PP : polypropylène

PE : polyéthylène

PES : polyester

(+) signifiant un tramage par la matière qui suit.

La phase réceptrice est constituée d'une solution 6M de $CaCl_2$.

La composition à déshydrater est une solution de tryptophane (0,51 g/l) et de phosphate monopotassique ($7,5 \times 10^{-2}$ M), l'activité de cette solution étant d'environ 0,99.

Les cinétiques d'extraction d'eau obtenues au moyen du procédé à travers les différentes membranes testées sont présentées dans la figure 5.

On observe que la vitesse de transport dépend du support hydrophobe utilisé, en raison des différences de caractéristiques géométriques. Les cinétiques les plus rapides mènent à un pourcentage d'extraction d'eau voisin de 95 %.

Le tableau II ci-dessous indique les flux initiaux d'eau, dont l'ordre de grandeur est de $10^{-2}$ mol/h.cm² ; le rapport des flux obtenus avec la membrane la plus efficace (6) et avec le support le plus résistant au transport d'eau (5) n'est que légèrement supérieur à 2. La membrane (4) a été retenue pour les exemples qui suivent.

EP 0 539 280 A1

TABLEAU II

| Support | Flux initial (x10⁻³ mol/h.cm²) |
|---------|---------|
| 1 | 15,5 |
| 2 | 16,2 |
| 3 | 13,4 |
| 4 | 18,5 |
| 5 | 9,63 |
| 6 | 22,1 |

Exemple 3

L'essai est effectué dans les mêmes conditions que l'exemple 2 avec la membrane 4 en faisant varier la composition de la phase réceptrice. La composition aqueuse est une solution de tryptophane (0,51 g/l) et de phosphate monopotassique (7,5 x 10⁻² M), l'activité de cette solution étant d'environ 0,99. Les résultats sont indiqués dans le tableau III ci-dessous :

TABLEAU III

| Composition de la phase réceptrice | | Activité eau | Flux initial d'eau (10⁻³ mol/h.cm²) | % d'eau éliminé après quatre heures |
|---|---|---|---|---|
| CaCl₂ | 1M | 0,94 | 1,75 | 10 |
| | 2M | 0,84 | 3,3 | 25 |
| | 4M | 0,54 | 7,7 | 50 |
| | 5M | 0,39 | 14,3 | 70 |
| | 6M | 0,25 | 18,2 | 80 |
| MgCl₂ | 4,5M | 0,45 | 13,3 | -- |
| NaCl | 5,4M | 0,7 | 9,63 | -- |

De ces résultats, on peut déduire que la vitesse et la quantité maximale d'eau extraite augmentent avec la concentration de $CaCl_2$ dans la phase réceptrice ou diminuent par conséquent avec l'accroissement de l'activité de l'eau. Cette tendance a été vérifiée avec les autres sels de chlorure ; d'une part, le flux initial d'eau décroît linéairement avec l'activité de l'eau dans la phase réceptrice, et d'autre part, il est indépendant de la nature du sel employé. La solution de $CaCl_2$ 6,0 M caractérisée par l'activité de l'eau la plus faible (voisine de 0,25) a été retenue pour l'exemple qui suit.

Essai au moyen du dispositif de la figure 1

L'exemple ci-après a été effectué avec le dispositif de la figure 1 avec la membrane 4, une solution de tryptophane (0,51 g/l) et une phase réceptrice à une concentration de $CaCl_2$ de 6M.

8

Exemple 4

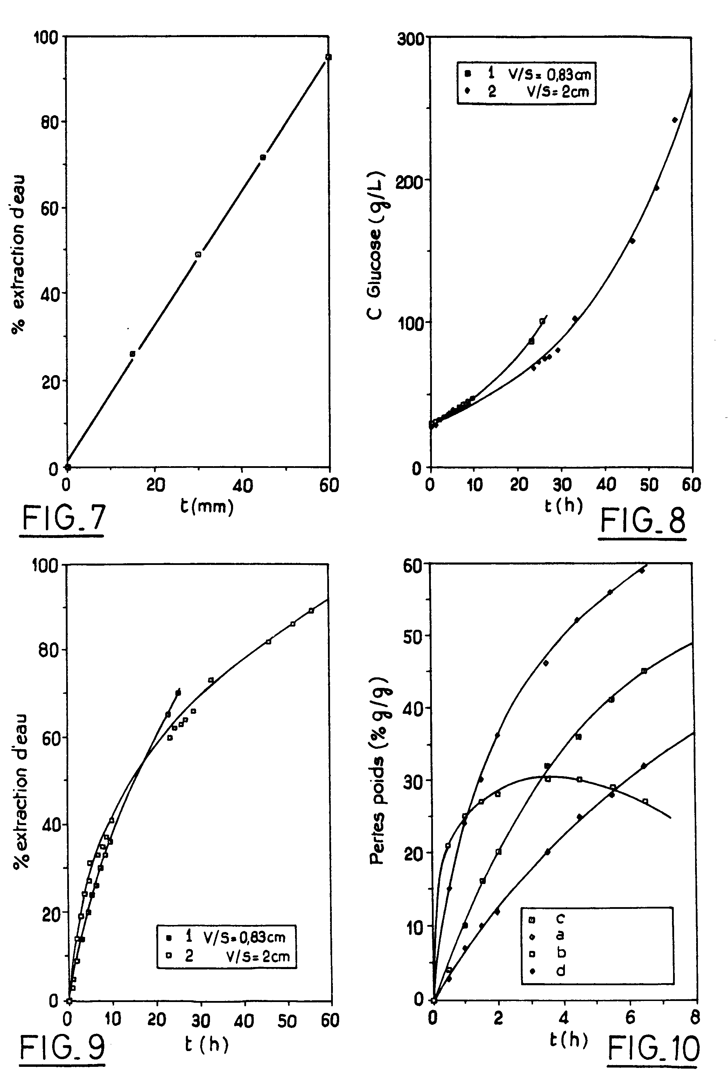

Les résultats sont figurés à la figure 6 qui indique la cinétique de concentration de la solution de tryptophane et à la figure 7 qui indique la cinétique d'extraction de l'eau.

On observe que la concentration du tryptophane croît en 1 heure d'expérience, de 0,5 à une valeur proche de 10 g/l, ce qui correspond à un facteur de concentration de l'ordre de 20. Pendant cette même durée, le pourcentage d'extraction d'eau de la solution augmente linéairement avec le temps, jusqu'à une valeur proche de 95 %.

Exemple 5

Dans les mêmes conditions, d'autres solutions à concentrer ont été testées.

Le tableau IV ci-dessous indique les principaux résultats obtenus lors de la concentration des sept solutions testées au moyen du procédé.

Après une heure de déshydratation, le facteur de concentration des solutions varie de 3,2 pour le jus de raisin à 19 pour la solution de tryptophane, ce qui correspond à des pourcentages d'extraction d'eau égaux, respectivement, à 68 et 95 %. Les différences observées sont liées aux valeurs initiales des activités de l'eau des solutions à concentrer, et par suite à leurs compositions spécifiques et aux concentrations du ou des solutés les constituant.

On note, dans certains cas et à des temps variables, l'apparition d'un précipité, en équilibre avec la solution concentrée. Des mesures d'extrait sec ont montré que le procédé peut mener jusqu'à l'obtention de 83 % de matières sèches (solution de glucose à une concentration initiale de 51 g/l) ou jusqu'à précipitation de 75 % du soluté (solution de kyotorphine initialement de 0,4 g/l).

TABLEAU IV

| Soluté | Facteur de concentration en 1 h | % eau extraite | Temps apparition précipité (mn) | % M.S. | % précipité |
|---|---|---|---|---|---|
| Tryptophane | 19 | 95 | - | - | - |
| Kyotorphine | 8,5 | 88 | 65 | 45 | 75 |
| Acide glutamique | 6,8 | 85 | 65 | 55 | - |
| Glucose | 8,5 | 88 | 75 | 83 | - |
| Vitamine $B_{12}$ | 11 | 91 | 75 | 28 | 34 |
| α Amylase | 13 | 92 | - | - | - |
| Jus de raisin | 3,2 | 68 | 90 | 70 | - |

Essai au moyen de dispositifs de fibres creuses

L'exemple ci-après a été effectué avec le dispositif selon la figure 2 avec deux modules de fibres creuses différents :

Exemple 6

TABLEAU V

|  | Module Référence | 1 | 2 |
|---|---|---|---|
| Carastéristiques des fibres | Nature | PVDF | polypropylène |
|  | ø interne (μm) | 900 | 1800 |
|  | Epaisseur (μm) | 200 | 400 |
|  | Nombre | 400 | 40 |
|  | Longueur (cm) | 60 | 50 |
|  | ø moyen du pore (μm- | 0,1 | 0,2 |
|  | porosité volumique (%) | 50 | 75 |
| Caractéristiques du module | Longueur totale (cm) | 85 | 60 |
|  | Diamètre (mm) | 50 | 20 |
|  | ø entrée phase à épurer (mm) | 12 | 12 |
|  | ø entrée phase réceptrice (mm) | 8 | 10 |
|  | Surface membranaire (m$^2$) | 0,6 | 0,1 |

Une solution de glucose à 30 g/l a été concentrée à travers des fibres creuses dans ces deux modules de surface d'échange importante (supérieure ou égale à 0,1 m$^2$). Ces expériences ont pour principal objectif de montrer la faisabilité industrielle du procédé. Les débits des phases à concentrer et réceptrice d'eau (CaCl$_2$ 6M) ont été fixés, respectivement à 130 l/h et 30 l/h. Les figures 8 et 9 et le tableau VI présentent respectivement la cinétique de concentration du glucose, la cinétique d'extraction d'eau, les conditions initiales et les flux initiaux d'eau mesurés.

On observe en 2,5 jours de manipulation, un facteur de concentration du glucose supérieur à 8 et une extraction d'eau voisine de 90 %.

Les cinétiques de concentration du glucose et d'extraction d'eau sont proches d'un module à l'autre, le rapport volume initial / surface d'échange étant favorable au système 1. Ce module est donc moins efficace que le 2. Ce résultat est confirmé par la comparaison des flux initiaux d'eau, dont l'ordre de grandeur est de 10$^{-3}$ mol/h. cm$^2$ : le flux est plus de trois fois plus important dans le cas du module 2 que dans le cas du module 1.

TABLEAU VI

| Conditions expérimentales et performances des modules | | | | |
|---|---|---|---|---|
| Module | Volume phase à concentrer intitial (1) | Volume phase réceptrice initial (1) | V / S | Flux initial (x10$^{-3}$ mol/h.cm$^2$) |
| 1 | 5 | 2 | 0,83 | 2,0 |
| 2 | 2 | 0,5 | 2 | 6,4 |

Déshydratation d'un produit alimentaire solide (pomme Elstar)

EXEMPLE 7

L'exemple suivant rapporte la déshydratation d'un produit alimentaire solide au moyen du procédé. Des pommes Elstar coupées en morceaux sont enveloppées dans une membrane de type 4.

Dans le but de comparer différents procédés de déshydratation d'un aliment solide, la déshydratation selon l'invention (a) a été menée parallèlement à une déshydratation osmotique (b), une évaporation classique (c) et une évaporation effectuée à travers une membrane hydrophobe (d). Les cinétiques de pertes de poids de quartiers de pomme soumis aux différents procédés sont présentées dans la figure 10.

Il faut noter que les pertes de poids initiales les plus importantes sont obtenues par déshydratation osmotique, avec ou sans membrane ; dans le cas de la déshydratation osmotique classique, on observe toutefois que la perte de poids diminue rapidement au cours des quatre premières heures, devient nulle et mène par suite à un lent gain de poids.

Le tableau VII indique les vitesses initiales de perte de poids et les pourcentages de poids perdus après six heures de mise en oeuvre des différents procédés. Il est important de noter que le procédé selon l'invention est 2,5 fois plus rapide que l'évaporation classique. Par ailleurs, dans le cadre de l'évaporation classique, l'enrobage de l'aliment dans la membrane hydrophobe réduit de 30 % le flux initial d'eau, en accord avec la porosité indiquée par le constructeur.

Le procédé le moins efficace est la déshydratation osmotique classique. La déshydratation selon le procédé, menant à une perte de poids de 60 % en 6 heures, est à l'opposé le procédé le plus performant.

TABLEAU VII

| Comparaison de divers procédés de déshydratation d'aliments solides | | |
|---|---|---|
| Procédé | Vitesse initiale de perte de poids (g.g./h) | % poids perdu après 6 heures |
| Evaporation | 0,10 | 45 |
| Evaporation + membrane | 0,07 | 32 |
| déshydratation osmotique | 0,24 | 26 |
| déshydratation osmotique + membrane | 0,25 | 60 |

**Revendications**

1. Procédé de déshydratation au moins partielle d'une composition aqueuse, caractérisé en ce que ladite composition à déshydrater est mise en contact, par l'intermédiaire d'une membrane hydrophobe microporeuse, avec une phase réceptrice dont l'activité de l'eau est sensiblement inférieure à celle de la composition aqueuse, et en ce que l'on récupère la composition aqueuse au moins partiellement déshydratée.

2. Procédé selon la revendication 1, caractérisé en ce qu'il est tel que le flux initial d'eau à travers la membrane est supérieur à $5.10^{-4}$ mole/h.cm$^2$, de préférence supérieure à $10^{-3}$ mole/h.cm$^2$.

3. Procédé selon la revendication 1, caractérisé en ce que la membrane présente une porosité volumique supérieure à 40 % et en ce que la taille moyenne des pores est comprise entre 0,02 et 5 $\mu$m.

4. Procédé selon l'une des revendications précédentes, caractérisé en ce que la membrane est formée au moins en majeure partie d'un polymère de polyoléfine éventuellement fluorée.

5. Procédé selon l'une des revendications 1 ou 2, caractérisé en ce que la phase réceptrice est liquide.

6. Procédé selon la revendication 5, caractérisé en ce que la phase réceptrice comprend une solution aqueuse d'au moins un soluté permettant d'abaisser l'activité de l'eau.

7. Procédé selon la revendication 6, caractérisé en ce que le soluté est du $CaCl_2$, de préférence au moins 5M.

8. Procédé selon la revendication 5, 6 ou 7, caractérisé en ce que la composition aqueuse est liquide et la phase réceptrice comprend en outre un ou plusieurs constituants volatils présents dans la composition aqueuse, de préférence à une concentration sensiblement égale à celle existante dans ladite composition aqueuse.

9. Procédé selon la revendication 8, caractérisé en ce que la phase réceptrice a une composition sensiblement identique à celle constituant ladite composition aqueuse liquide et comprend en outre le ou les soluté(s) permettant d'abaisser l'activité de l'eau.

10. Procédé selon la revendication 1, caractérisé en ce que la phase réceptrice présente initialement une activité de l'eau inférieure à environ 0,6, et de préférence inférieure à 0,4 et la composition aqueuse présente initialement une activité de l'eau environ supérieure à 0,9, notamment les solutions de composés biologiques, les jus de fruits, les légumes ou les fruits coupés.

11. Procédé de déshydratation au moins partielle en continu d'une composition aqueuse liquide ou gazeuse selon la revendication 1, caractérisé en ce qu'un courant de ladite composition aqueuse liquide ou gazeuse à déshydrater est mis en contact avec une phase réceptrice, stationnaire ou mobile, par l'intermédiaire d'une membrane hydrophobe.

12. Dispositif pour mettre en oeuvre le procédé de l'une des revendications 1 à 10, caractérisé en ce qu'il comprend un ou plusieurs compartiments (5,17) dans lesquels est disposée la composition aqueuse, une paroi au moins desdits compartiments étant formée par une membrane (3,11) telle que définie aux revendications 1, 3 ou 4 qui sépare la composition de la phase réceptrice.

13. Dispositif pour mettre en oeuvre le procédé selon la revendication 11, caractérisé en ce que la membrane hydrophobe est formée de fibres creuses (11) à l'intérieur (18) desquelles circule la composition aqueuse à déshydrater, liquide ou gazeuse, alimentée par une entrée (12) et récupérée par une sortie (19), lesdites fibres creuses étant immergées dans la phase réceptrice (14).

14. Dispositif selon la revendication 13, caractérisé en ce que la phase réceptrice est liquide et mobile autour des fibres creuses (11), entrant dans le volume extérieur aux fibres par une entrée (15) et sortant par une sortie (16).

FIG_1

FIG_3

FIG_2

FIG_4

FIG_5

FIG_6

FIG.7

FIG.8

FIG.9

FIG.10

**Office européen des brevets**

# RAPPORT DE RECHERCHE EUROPEENNE

Numero de la demande

EP    92 40 2861
Page 1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | CENTRAL PATENTS INDEX, BASIC ABSTRACTS JOURNAL Section Ch, 3 Novembre 1976 Derwent Publications Ltd., London, GB; Class D, AN 76-72793X & JP-A-51 090 752 (EBARA INFILCO K.K.) 10 Août 1976 * abrégé * | 1,5,6 | B01D61/00 |
| A | --- | 13,14 | |
| A | WO-A-9 115 284 (NEDERLANDSE ORGANISATIE VOOR TOEGEPAST NATUURWETENSCHAPPELIJK ONDERZOE) 17 Octobre 1991 * abrégé * * page 2, ligne 17 - page 5, ligne 12 * --- | 1,2,5,6, 11-14 | |
| A | EP-A-0 271 949 (ENICHEM ANIC S.P.A.) * abrégé * * colonne 2, ligne 4 - ligne 33 * * colonne 3, ligne 16 - ligne 54 * * colonne 5, ligne 45 - colonne 6, ligne 51 * * figure * --- | 1,4-6,9, 11 | |
| A | WATER RESEARCH. vol. 15, no. 3, 1981, OXFORD GB pages 395 - 399 E.B.PUGSLEY ET AL. 'DEWATERING MUNICIPAL SLUDGES BY OSMOSIS' * le document en entier * --- -/-- | 1,5-7, 10-12 | |

**DOMAINES TECHNIQUES RECHERCHES (Int. Cl.5)**

B01D

Le présent rapport a été établi pour toutes les revendications

| Lieu de la recherche | Date d'achèvement de la recherche | Examinateur |
|---|---|---|
| LA HAYE | 27 JANVIER 1993 | STEVNSBORG N. |

Office européen
des brevets

**RAPPORT DE RECHERCHE EUROPEENNE**

Numero de la demande

EP    92 40 2861
Page 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 218 321 (AGENCY OF INDUSTRIAL SCIENCE & TECHNOLOGY ET AL.)<br>* abrégé *<br>* colonne 2, ligne 18 - ligne 35 *<br>* colonne 3, ligne 15 - colonne 5, ligne 31 *<br>* figures 1,2 * | 1,2,4-7, 10-12 | |
| A | US-A-3 858 499 (RESEARCH DEVELOPMENT SYSTEMS, INC.)<br>* colonne 2, ligne 9 - ligne 48 *<br>* colonne 4, ligne 23 - colonne 6, ligne 17 *<br>* figure 1 * | 1,5-6, 10-11 | |
| A | GB-A-2 168 981 (ASAHI KASEI K.K.)<br><br>* abrégé *<br>* revendications 1-3 * | 3,4,13, 14 | |
| | | | **DOMAINES TECHNIQUES RECHERCHES (Int. Cl.5)** |

Le présent rapport a été établi pour toutes les revendications

| Lieu de la recherche | Date d'achèvement de la recherche | Examinateur |
|---|---|---|
| LA HAYE | 27 JANVIER 1993 | STEVNSBORG N. |